# EUROPEAN PATENT SPECIFICATION

(11) **EP 1 753 329 B1**
(45) Date of publication and mention of the grant of the patent: **12.05.2010**
(21) Application number: 05750324.5
(22) Date of filing: 10.06.2005
(51) Int. Cl.: A47J 31/36, A47J 31/46

(54) **DRINK MACHINE**
GETRÄNKEAUTOMAT
MACHINE A BOISSON

(30) Priority: 10.06.2004 GB 0412980
(43) Date of publication of application: 21.02.2007
(73) Proprietor: The Technology Partnership Plc, Melbourn, Royston, Hertfordshire SG8 6EE (GB)
(72) Inventor: CARR, Matthew, John, Cambridge CB4 3EW (GB); WILLIAMS, Matthew, Kent, Riverfield, Bedford MK41 0SD (GB)
(74) Representative: Haley, Stephen
(86) International application number: PCT/GB2005/002310
(87) International publication number: WO 2005/120312

(56) References cited:
- US-A1- 2002 141 742

## Description

The present invention relates to a device which can be used to make hot drinks, such as an espresso coffee.

Conventional espresso coffee machines work by forcing hot water through coffee grounds at a high pressure (typically 9 or 10 bar), thus permitting the right mix of substances to be extracted from the grounds.

Early espresso machines achieved this high pressure by pushing a water tight piston against the hot water, which was confined within a cylinder. This piston was driven down by hand, usually utilising a lever arrangement to create large forces. GB 718965 shows an early form of such an arrangement and WO 03/101264 shows a more recent example. These early coffee machines, however, required a high degree of skill in order to produce a good cup of espresso, and hence could be unreliable. They also tended to be bulky and hence unsuitable for use outside coffee shops.

More recent espresso machines obviate the requirement for manual operation of a lever by replacing the piston and cylinder with an electrically operated pump, typically powered by mains electricity. US 3119322 outlines such a machine. These machines usually require cold water to be taken into the machine, which this is then pressurised before being heated. These machines are typically complex, heavy and bulky, due to the large number of components involved. This means they are often prohibitively expensive.

Consequently, there exists a need for an espresso machine that requires less skill and effort to operate than a lever and piston machine, and yet is cheaper, simpler, lighter and smaller than an electrically operated pump machine.

According to the present invention there is provided a thermally-actuated pump for use in a hot drink maker comprising: a thermal actuator and a piston, wherein the piston is disposed within a cylinder and further wherein the piston is coupled to the thermal actuator; such that, in use, heat supplied to the thermal actuator causes the thermal actuator to drive the piston further into the cylinder and create an increased pressure in the cylinder.

Generally the thermal actuator comprises a material that expands significantly on heating, for example a solid that expands on melting (such as paraffin wax), a liquid that expands on boiling (such as an alcohol), or a material that expands on undergoing a change to its crystalline structure at a certain temperature (such as nickel-titanium). Thus, thermal actuators according to the present invention work on the principle of taking energy from a heat source, for example a hot liquid in contact with the thermal actuator, and using that energy to drive a piston and therefore to pressurise hot water and force it through a constriction created by coffee grounds in order to make espresso coffee. When the heat source comprises a hot liquid in contact with the thermal actuator, the thermal actuator preferably expands only when the hot liquid is at or above a temperature sufficient to make espresso coffee. Typically, the hot liquid is hot water, and preferably this same hot water is subsequently compressed through the coffee grounds to make espresso coffee.

The thermal actuator, and any hot liquid in contact with it, can be contained within the cylinder or within a well.

When the thermal actuator, and any hot liquid in contact with it, are contained within the cylinder, they may be contained in a top part of the cylinder or a bottom part of the cylinder wherein these top and bottom parts are separated by a separating means. Usually the piston comprises a piston head and a piston shaft, and preferably the piston head is used as the separating means.

In this embodiment, the bottom part of the cylinder is where hot water is compressed to make espresso coffee.

When the thermal actuator is heated by hot liquid, for example hot water, this hot liquid can subsequently be compressed by the piston to make the hot drink. In order to achieve this, the liquid is typically introduced into the top part of the cylinder, preferably through perforations in a top surface, and this liquid is transferred to the bottom part of the cylinder to be compressed. In order to facilitate this transfer, one or more transfer pipes and/or air vents may be introduced, wherein, in use, a transfer pipe allows liquid to flow from the top part of the cylinder to the bottom part of the cylinder, and an air vent allows displaced air to escape from the bottom part of the cylinder. Preferably, the one or more transfer pipes and/or air vents are formed in the separating means. The one or more transfer pipes preferably contain a valve such that liquid can only flow one way (into the bottom part of the cylinder). Preferably this valve is float-type check valve. The air vent is preferably configured such that it closes once the cylinder is full to prevent further air or water escaping.

The water, and indeed any hot liquid used to heat the actuator, can be heated prior to being placed into the top part of the cylinder, or it can be heated within the top and/or the bottom parts of the cylinder. If the liquid is heated within the top and/or bottom parts of the cylinder, it may be heated via an internal heat source (as is the case for conventional pump-operated espresso machines) or via an external source such as a flame. Preferably an internal heat source such as a heating element is used, and this can be placed in the top and/or bottom parts of the cylinder, such that liquid in contact with the thermal actuator is heated prior to or during contact with the thermal actuator.

In an alternative embodiment, the thermal actuator, and any hot liquid in contact with it, may be contained within a well. It is again preferable that any hot liquid is hot water, and that this hot water is subsequently compressed through the coffee grounds to make the espresso coffee. To this end, the well can be connected to the cylinder by a transfer pipe such that, in use, the transfer pipe conveys hot liquid from the well to the cylinder. As a further option, a transfer pipe may connect a reservoir, which is adjacent, but unconnected to the well, with the cylinder such that, in use, hot liquid placed in the reservoir can flow into the cylinder prior to the thermal actuator within the well being supplied with heat and therefore prior to the actuator expanding. It is also envisaged that the transfer pipe may be configured such that hot liquid from both a reservoir and a well may flow, preferably via the same pipe, into the cylinder.

When the pump according to the present invention comprises a well, the cylinder may additionally comprise an air vent, preferably in combination with a valve that closes once the cylinder is full. Further, each transfer pipe may contain a one way valve such that liquid can only flow into the cylinder. Preferably these valves are float-type check valves.

Any hot liquid contained within a thermally-actuated pump containing a well may be supplied directly to the well and/or reservoir, or may be heated within the well and/or reservoir. If the liquid is heated within the well and/or reservoir, it may be heated via an internal heat source (as is the case for conventional pump-operated espresso machines) or *via* an external source such as a flame.

A thermally-actuated pump according to any of the above-described embodiments may additionally comprise means for controlling the pressure build-up in the cylinder relative to the extension of the actuator such that, in use, the piston is not driven into the cylinder until a critical pressure in the cylinder is reached. Such means therefore act as a temporary storage device for the energy extracted from the heat source (for example hot liquid) by the thermal actuator, prior to activating the piston. Preferably, such means for controlling pressure build up comprises a spring fitted between the thermal actuator and the piston, in combination with a release valve fitted within the path of fluid flow out of the cylinder. Such a release valve may be manually or automatically operated, and may be placed before or after any constriction created by, for example, coffee grounds.

Further, a thermally-actuated pump according to any of the above-described embodiments preferably comprises a return mechanism, such that the piston and the actuator return to the start position after each use. This return mechanism preferably comprises a spring.

A thermally-actuated pump according to any of the above-described embodiments may further comprise a basket connected to the cylinder such that, in use, once any release valve has been opened, hot pressurised liquid passes from the cylinder and into the basket. Preferably the basket is arranged to contain, in use, a concentrate for making hot drinks, and more preferably the concentrate is coffee grounds.

The present invention also provides an espresso coffee machine comprising a thermally-actuated pump, use of such an espresso coffee machine to make hot drinks and use of a thermally-actuated pump to make hot drinks. Preferably however, espresso coffee machines and thermally-actuated pumps according to the invention are arranged to be used to make espresso coffee.

The invention will now be exemplified with the aid of the following drawings.

Figures 1A and 1B show a side on view of a thermally-actuated pump according to the present invention.

Figures 2A, 2B and 2C show side-on views of an alternative thermally-actuated pump.

Figure 3 shows a side-on view of a thermally-actuated pump that incorporates a well.

Figures 4A, 4B and 4C show schematic diagrams of the thermally-actuated pump of Figure 3 in use.

Figure 5 shows a side-on view of a thermally-actuated pump that incorporates a pressure control device and a well.

Figure 6 shows a side-on view of a thermally-actuated pump that incorporates a reservoir that is separate to a well.

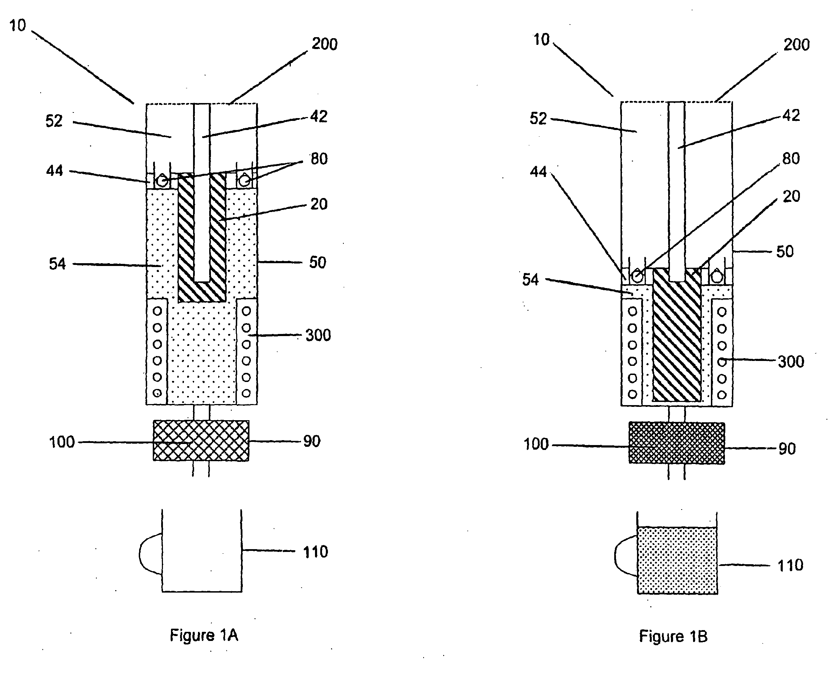

Figures 1A and 1B show a first example of a thermally actuated pump according to the invention. In this example, a substantially cylindrical thermal actuator 20 is situated within a cylinder 50, and a piston shaft 42 is embedded within this cylindrical thermal actuator 20 such that the piston shaft 42 runs part way along the cylindrical axis of the thermal actuator 20 and then protrudes from the top end of the thermal actuator 20 so as to contact a perforated cylinder lid 200.

A piston head 44 bridges the gap between the top edge of the thermal actuator 20 and the cylinder wall, and as such divides the top part 52 of the cylinder 50 from the bottom part 54 of cylinder 50.

Two one-way valves 80, which can take the form of float type check valves, are positioned within the piston head 44 to enable water to flow from the top part 52 of the cylinder 50 into the bottom part 54 of the cylinder 50, and to allow displaced air to escape from the bottom part 54 of the cylinder 50 to the top part 52.

The bottom part 54 of the cylinder 50 contains a heating element 300 with which the water in the bottom part 54 of the cylinder 50 is heated. Below the cylinder 50 is a basket 90 containing, in use, coffee grounds 100. Cup 110 sits below the basket 90.

On input of cold water through the perforated cylinder lid 200 and into the top part 52 of the cylinder 50, water flows through one of the one-way valves 80 and into the bottom part 54 of the cylinder 50, as shown in Figure 1A. Displaced air escapes through the other one-way valve 80. Once the bottom part 54 of the cylinder 50 is full, the one-way valves 80 close and thus water cannot leave the bottom part 54 of the cylinder 50 to re-enter the top part 52 of the cylinder 50.

Cold water in the bottom part 54 of the cylinder 50 is heated by the heating element 300, and after a short delay the thermal actuator 20 expands and the heating element 300 is switched off by a thermostat (not shown). Expansion of the thermal actuator 20 forces the piston shaft 42 to occupy less volume within the thermal actuator 20, and as a result a force pushing the piston shaft 42 upwards is generated. Since the piston shaft 42 is however constrained by the perforated container lid 200, the piston head 44 is instead forced downwards thus compressing the hot water in the lower part 54 of the cylinder 50 as shown in Figure 1B. As previously stated, the one-way valves 80 prevent water returning to the top part 52 of the cylinder 50.

Once sufficient pressure is achieved within the lower part 54 of the cylinder 50, water is pushed through the basket 90, which contains the coffee grounds 100. Espresso coffee exits from the basket 90 and is collected in the cup 110 which sits below the thermally actuated pump 10.

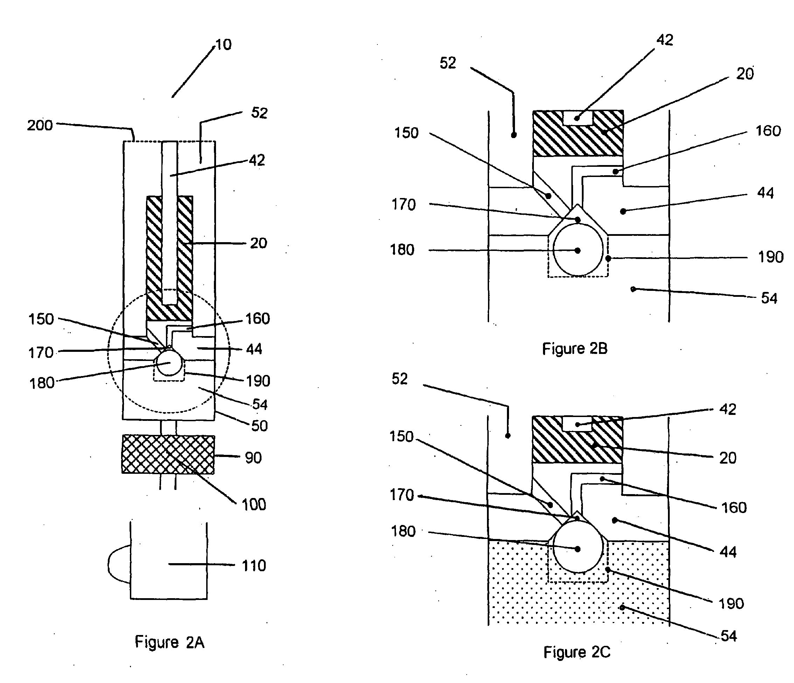

Figures 2A, 2B and 2C show a second example of a thermally-actuated pump according to the invention. In these figures, the piston shaft 42 and the piston head 44 are again separated by the thermal actuator 20 such that, in use, extension of the thermal actuator causes the piston head 44 to move downwards as explained above. In this embodiment, a transfer pipe 150 and an air vent pipe 160 are formed within the piston head 44, such that water can enter the bottom part 54 of the cylinder 50 *via* the transfer pipe 150 and air can exit the bottom part 54 of the cylinder 50 *via* the air vent pipe 160. A single float-type check-valve ball 180, which is retained within a perforated retaining cage 190, controls them both. This greatly increases the simplicity of the design. Hot water is typically poured into the top part 52 of the cylinder 50.

Figure 2B shows this second example when the bottom part 54 of the cylinder 50 is empty; transfer pipe 150 and air vent pipe 160 connect to an air space 170 such that, in use, water can flow from the top part 52 of the cylinder 50, through the transfer pipe 150 and into the bottom part 54 of the cylinder 50, and displaced air can leave the bottom part 54 of the cylinder 50 *via* air vent pipe 160. Once the bottom part 54 of cylinder 50 is full of water however, as shown in Figure 2C, float-type check-valve ball 180 floats on top of the water in the bottom part 54 of the cylinder, hence rising within its retaining cage 190. This seals the air space 170 such that further water flowing through the transfer pipe 150 can only return to the top part 52 of the cylinder *via* air vent pipe 160. The bottom part 52 of the cylinder 50 can no longer equilibrate with atmospheric pressure. Therefore, compression of the water can ensue in the same manner as in the first example.

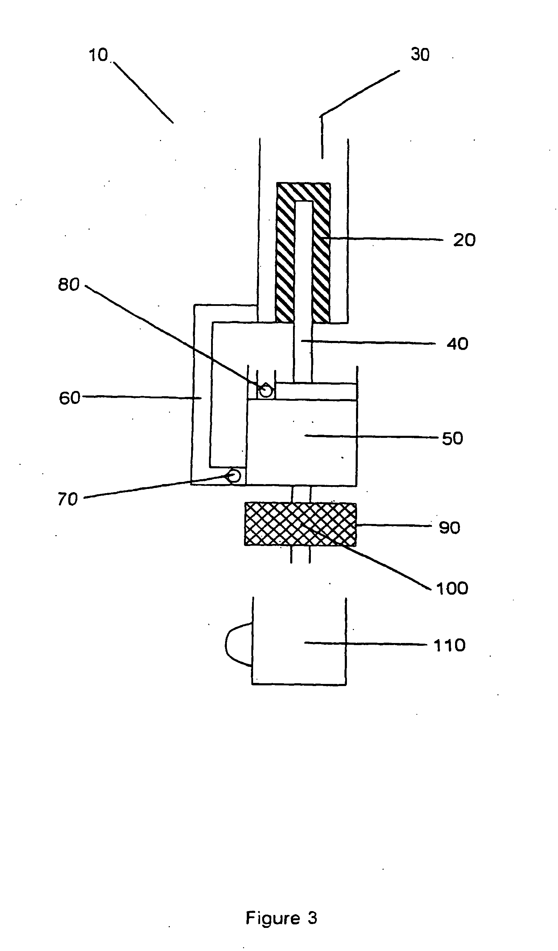

Figure 3 shows a third example of a thermally-actuated pump 10 according to the invention. A thermal actuator 20 is situated within a well 30. The thermal actuator 20 is coupled to a regularly configured piston 40 such that activation of the actuator drives the piston into a cylinder 50. Hot water is typically poured into the well 30.

The well 30 is connected to the cylinder 50 by a transfer pipe 60, which contains a one way valve 70. Displaced air is allowed to escape from the cylinder via a float-type check-valve 80 situated in the piston head.

Beneath the cylinder lies a basket 90, containing, in use, coffee grounds 100. Cup 110 sits below the thermally-actuated pump 10, and in use this cup 110 fills with espresso coffee.

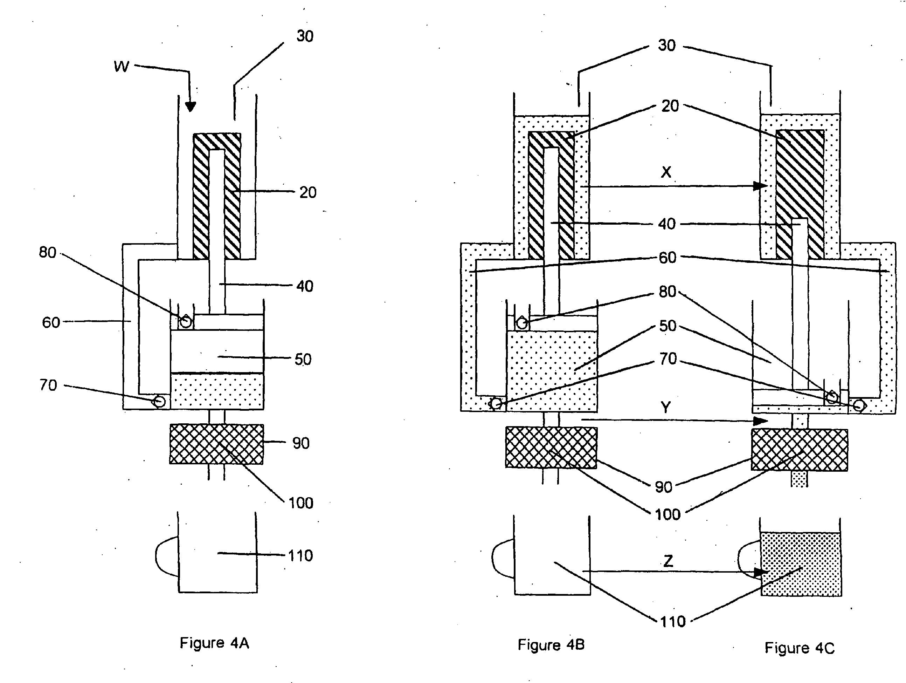

Figure 4A shows the thermally-actuated pump of Figure 3 prior to complete filling of the cylinder 50. When hot water is placed into the top of the well 30 (as shown at W), it flows through the transfer pipe 60, past the one way valve 70, and into the cylinder 50. Displaced air leaves the cylinder 50 through float-type check-valve 80 in order to maintain atmospheric pressure. Once the cylinder is full, the float-type check-valve 80 closes and equilibration of the cylinder with atmospheric pressure can no longer occur. Upon further addition of hot water, all of the cylinder, the transfer pipe and the well become full, as shown in Figure 4B. After a short delay, the hot water in the well causes the thermal actuator 20 to extend (as shown at X), which in turn causes the piston 40 to be driven down into the cylinder 50.

This compresses the water contained within the cylinder (as shown at Y). The one way valve 70 and the check valve 80 ensure that the mounting pressure does not force hot water back up the transfer pipe 60 or out of the cylinder.

As the piston advances further, the pressure continues to rise until adequate pressure for making an espresso coffee is reached. This arrangement is shown in Figure 4C. At this point, the hot water is forced through the basket 90, which contains the coffee grounds 100. Espresso coffee exits from the basket and is collected in a cup 110 below the thermally-actuated pump 10 (as shown at Z).

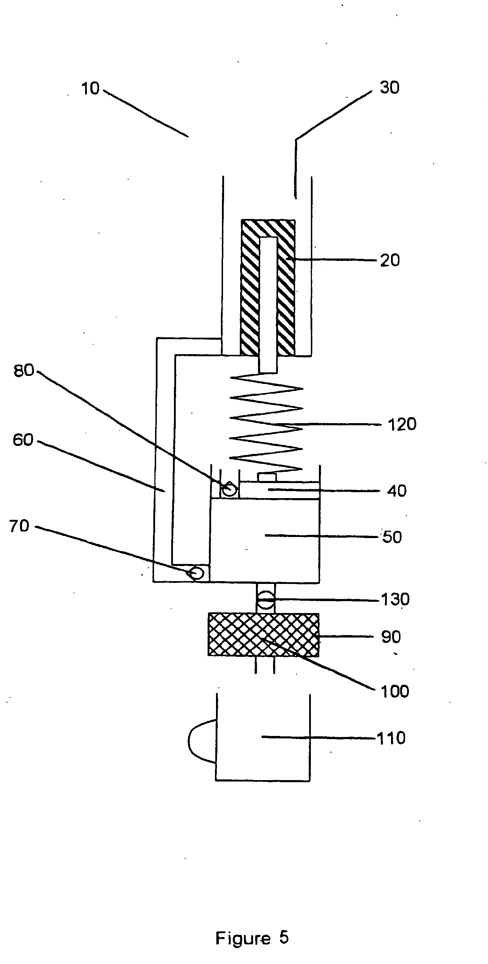

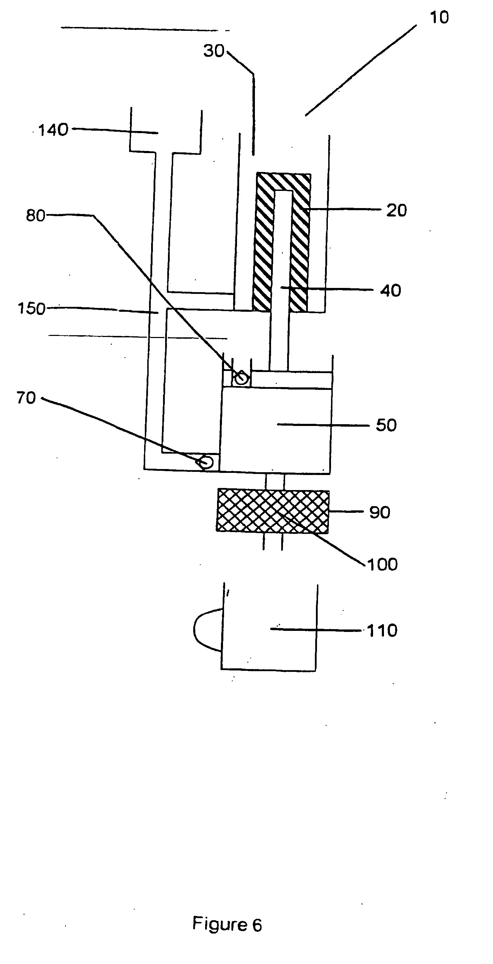

Further alternative examples of the invention are shown in Figures 5 and 6.

Figure 5 shows a thermally-actuated pump incorporating a pressure control device. In this embodiment, the pressure control device takes the form of a spring 120. This spring 120 is fitted between the thermal actuator 20 and the piston 40, such that it takes the place of a portion of the piston shaft of the earlier examples. The spring 120 is present in conjunction with a release valve 130 which is fitted within the path of fluid from the cylinder to the basket. Alternatively, this release valve 130 could be placed in the exit tube that leads from the coffee grounds 100 and out of the machine, thus allowing espresso to be placed into the cup 110. In use, extension of the thermal actuator causes compression of the spring 120, which allows a controlled build-up of pressure of the hot water in the cylinder 50. This pressure is determined by the stiffness of the spring 120 and its pre-compression force. Release valve 130, which is in the closed position, prevents escape of the hot water through the coffee grounds 100.

After the thermal actuator has reached its full extension and the spring 120 is fully compressed, release valve 130 is opened, allowing the pressurised water to escape through the coffee grounds 100 and into the cup 110. The pressure acting on the hot water as cylinder 50 empties, however, is controlled by the stiffness and pre-compression of the spring 120, rather than the rate of extension of the thermal actuator as in other embodiments. Appropriate selection of the stiffness and pre-compression of the spring 120, along with appropriate selection of the characteristics of the release valve 130, allow the water pressure to be maintained within an acceptable range during operation.

Figure 6 shows a thermally-actuated pump incorporating a reservoir 140 that is separate to the well 30. In this embodiment, the transfer pipe 150 connects both the reservoir 140 and the well 30 to the cylinder 50. In use, this arrangement facilitates the filling of the cylinder with water from the reservoir prior to exposing the thermal actuator 20 to any hot water, thus ensuring that the cylinder 50 is full before extension of the actuator 20 begins.

It will be understood by a person skilled in the art that each of the individual features disclosed in the above embodiments can be interchanged or combined as desired within the scope of the claims.

## Claims

1. A thermally-actuated pump (10) for use in a hot drink maker comprising: a thermal actuator (20) and a piston (40), wherein the piston (40) is disposed within a cylinder (50) and further wherein the piston (40) is coupled to the thermal actuator (20); such that, in use heat supplied to the thermal actuator (20) causes the thermal actuator (20) to drive the piston (40) further into the cylinder (50) and create an increased pressure in the cylinder (50).

2. A pump (10) according to claim 1, wherein heat is supplied to the thermal actuator (20) by virtue of hot liquid in contact with the thermal actuator (20).

3. A pump (10) according to claim 2, wherein the thermal actuator (20) does not expand unless the hot liquid is at a temperature sufficient to make espresso coffee.

4. A pump (10) according to any preceding claim, wherein the pump further comprises an internal heat source.

5. A pump (10) according to any preceding claim, wherein the cylinder (50) comprises a top part (52) and a bottom part (54), and further wherein the piston (40) comprises a piston shaft (42) and a piston head (44), such that the top part (52) of the cylinder is separated from the bottom part (54) of the cylinder by the piston head (44).

6. A pump (10) according to claim 5, wherein the bottom part (54) of the cylinder (50) comprises a heating element (300).

7. A pump (10) according to either of claims 5 or 6, wherein a transfer pipe (150) connects the top part (52) of the cylinder to the bottom part (54).

8. A pump according to claim 7, wherein the transfer pipe (150) contains a one way valve (180) such that, in use, liquid flows only towards the bottom part (54) of the cylinder (50).

9. A pump (10) according to any of claims 5 to 8 wherein the piston head (44) or the bottom part (54) of the cylinder (50) contains an air vent (160) such that, in use, when hot liquid initially flows into the bottom part (54) of the cylinder (50), displaced air is allowed to escape.

10. A pump (10) according to claim 9, wherein the air vent (160) is configured such that once the bottom part (54) of the cylinder (50) contains enough liquid, air is no longer permitted to escape and an increase in pressure in the bottom part (54) of the cylinder (50) can ensue.

11. A pump (10) according to any of claims 1-4, further comprising a well (30), wherein the thermal actuator (20) is positioned within the well (30).

12. A pump (10) according to claim 11, further comprising a transfer pipe (60).

13. A pump according to claim 12, wherein the transfer pipe (60) is positioned to connect the well (30) to the cylinder (50) such that, in use, the transfer pipe (60) conveys hot liquid between the well (30) and the cylinder (50).

14. A pump (10) according to claim 12, wherein the transfer pipe connects a reservoir (140), which is adjacent but unconnected to the well (30), with the cylinder (50) arranged such that, in use, hot liquid is placed into the reservoir (140) and flows into the cylinder (50) prior to placing hot liquid in the well (30).

15. A pump (10) according to claim 12, wherein the transfer pipe (150) is configured such that water from both a reservoir (140) and the well (30) flows, via the same pipe, into the cylinder (50).

16. A pump (10) according to any of claims 12 to 15, wherein the transfer pipe (150) contains a one way valve (180) such that, in use, hot liquid flows only towards the cylinder (50).

17. A pump (10) according to any of claims 12 to 16, wherein the cylinder (50) incorporates an air vent (160) such that, in use, when hot liquid initially flows into the cylinder (50), displaced air is allowed to escape.

18. A pump (10) according to claim 17, wherein the air vent (160) is configured such that once the cylinder (50) contains enough water, air is no longer permitted to escape and an increase in pressure within the cylinder (50) can ensue.

19. A pump (10) according to any of claims 10, 17 or 18, wherein the vent is a float-type check-valve (180, 190).

20. A pump (10) according to any preceding claim and further comprising means (120) for controlling the pressure build-up in the cylinder (50) relative to the extension of the actuator (20) such that, in use, the piston (40) is not driven further into the cylinder (50) until a critical pressure in the cylinder (50) is reached.

21. A pump (10) according to claim 20, wherein the means for controlling pressure build-up comprises a spring (120) fitted between the thermal actuator (20) and the piston (40), in combination with a release valve (130) fitted within the path of fluid flow from the cylinder (50).

22. A pump (10) according to any preceding claim, further comprising a return mechanism, such that the piston (40) and the actuator (20) return to the start position after each use.

23. A pump (10) according to any preceding claim, further comprising a basket (90) connected to the cylinder (50) such that, in use, once any release valve has been opened, hot pressurised liquid passes from the cylinder (50) and into the basket (90).

24. An espresso coffee machine comprising a thermally-actuated pump (10) according to any preceding claim.

## Patentansprüche

1. Thermisch betätigte Pumpe (10) für die Verwendung in einer Heißgetränk-Zubereitungsvorrichtung, die Folgendes umfasst: eine Thermo-Betätigungsvorrichtung (20) und einen Kolben (40), wobei der Kolben (40) in einem Zylinder (50) angeordnet ist und wobei weiter der Kolben (40) an die Thermo-Betätigungsvorrichtung (20) gekoppelt ist, so dass in Gebrauch an die Thermo-Betätigungsvorrichtung (20) zugeführte Wärme die Thermo-Betätigungsvorrichtung (20) veranlasst, den Kolben (40) weiter in den Zylinder (50) zu treiben und einen erhöhten Druck im Zylinder (50) zu erzeugen.

2. Pumpe (10) nach Anspruch 1, wobei Wärme mittels heißer Flüssigkeit, die mit der thermischen Betätigungsvorrichtung (20) in Kontakt ist, an die Thermo-Betätigungsvorrichtung (20) zugeführt wird.

3. Pumpe (10) nach Anspruch 2, wobei sich die Thermo-Betätigungsvorrichtung (20) nur ausdehnt, wenn die heiße Flüssigkeit eine zum Zubereiten von Espressokaffee ausreichende Temperatur hat.

4. Pumpe (10) nach einem der vorangehenden Ansprüche, wobei die Pumpe weiter eine interne Wärmequelle umfasst.

5. Pumpe (10) nach einem der vorangehenden Ansprüche, wobei der Zylinder (50) einen oberen Teil (52) und einen unteren Teil (54) umfasst und wobei weiter der Kolben (40) einen Kolbenschaft (42) und einen Kolbenkopf (44) umfasst, so dass der obere Teil (52) des Zylinders durch den Kolbenkopf (44) vom unteren Teil (54) des Zylinders getrennt ist.

6. Pumpe (10) nach Anspruch 5, wobei der untere Teil (54) des Zylinders (50) ein Heizelement (300) umfasst.

7. Pumpe (10) nach einem der Ansprüche 5 oder 6, wobei ein Leitungsrohr (150) den oberen Teil (52) des Zylinders mit dem unteren Teil (54) verbindet.

8. Pumpe (10) nach Anspruch 7, wobei das Leitungsrohr (150) ein Rückschlagventil (180) enthält, so dass in Gebrauch Flüssigkeit nur zum unteren Teil (54) des Zylinders (50) fließt.

9. Pumpe (10) nach einem der Ansprüche 5 bis 8, wobei der Kolbenkopf (44) oder der untere Teil (54) des Zylinders (50) eine Entlüftungsöffnung (160) enthält, so dass in Gebrauch, wenn heiße Flüssigkeit zuerst in den unteren (54) Teil des Zylinders (50) fließt, verdrängte Luft entweichen kann.

10. Pumpe (10) nach Anspruch 9, wobei die Entlüftungsöffnung (160) so ausgebildet ist, dass wenn der untere Teil (54) des Zylinders (50) genügend Flüssigkeit enthält, Luft nicht mehr entweichen kann und ein Druckanstieg im unteren Teil (54) des Zylinders (50) erfolgen kann.

11. Pumpe (10) nach einem der Ansprüche 1-4, weiter umfassend einen Flüssigkeitsbehälter (30), wobei die Thermo-Betätigungsvorrichtung (20) im Flüssigkeitsbehälter (30) positioniert ist.

12. Pumpe (10) nach Anspruch 11, weiter umfassend ein Leitungsrohr (60).

13. Pumpe (10) nach Anspruch 12, wobei das Leitungsrohr (60) dazu positioniert ist, den Flüssigkeitsbehälter (30) mit dem Zylinder (50) zu verbinden, so dass in Gebrauch das Leitungsrohr (60) heiße Flüssigkeit zwischen dem Flüssigkeitsbehälter (30) und dem Zylinder (50) transportiert.

14. Pumpe (10) nach Anspruch 12, wobei das Leitungsrohr einen Speicherbehälter (140), der neben dem Flüssigkeitsbehälter (30) angeordnet ist, aber nicht mit ihm verbunden ist, mit dem Zylinder (50) verbindet und so angeordnet ist, dass in Gebrauch heiße Flüssigkeit in den Speicherbehälter (140) platziert wird und in den Zylinder (50) fließt, bevor heiße Flüssigkeit in den Flüssigkeitsbehälter (30) platziert wird.

15. Pumpe (10) nach Anspruch 12, wobei das Leitungsrohr (150) so ausgebildet ist, dass Wasser sowohl von einem Speicherbehälter (140) als auch dem Flüssigkeitsbehälter (30) über das selbe Rohr in den Zylinder (50) fließt.

16. Pumpe (10) nach einem der Ansprüche 12 bis 15, wobei das Leitungsrohr (150) ein Rückschlagventil (180) enthält, so dass in Gebrauch heiße Flüssigkeit nur zum Zylinder (50) fließt.

17. Pumpe (10) nach einem der Ansprüche 12 bis 16, wobei der Zylinder (50) eine Entlüftungsöffnung (160) enthält, so dass in Gebrauch, wenn heiße Flüssigkeit zuerst in den Zylinder (50) fließt, verdrängte Luft entweichen kann.

18. Pumpe (10) nach Anspruch 17, wobei die Entlüftungsöffnung (160) so ausgebildet ist, dass wenn der Zylinder (50) genügend Wasser enthält, Luft nicht mehr entweichen kann und ein Druckanstieg im Zylinder (50) erfolgen kann.

19. Pumpe (10) nach einem der Ansprüche 10, 17 oder 18, wobei es sich bei der Entlüftungsöffnung um ein Schwimmer-Rückschlagventil (180, 190) handelt.

20. Pumpe (10) nach einem der vorangehenden Ansprüche und weiter umfassend ein Mittel (120) zum Regeln des Druckaufbaus im Zylinder (50) relativ zur Ausdehnung der Betätigungsvorrichtung (20), so dass in Gebrauch der Kolben (40) erst weiter in den Zylinder (50) getrieben wird, wenn ein kritischer Druck im Zylinder (50) erreicht ist.

21. Pumpe (10) nach Anspruch 20, wobei das Mittel zum Regeln von Druckaufbau eine zwischen der thermischen Betätigungsvorrichtung (20) und dem Kolben (40) angebrachte Feder (120) in Kombination mit einem im Pfad des Fluidflusses vom Zylinder (50) angebrachten Ablassventil (130) umfasst.

22. Pumpe (10) nach einem der vorangehenden Ansprüche, weiter umfassend einen Rückholmechanismus, so dass der Kolben (40) und die Betätigungsvorrichtung (20) nach jedem Gebrauch zur Anfangsposition zurückkehren.

23. Pumpe (10) nach einem der vorangehenden Ansprüche, weiter umfassend einen Korb (90), der mit dem Zylinder (50) verbunden ist, so dass in Gebrauch, wenn ein beliebiges Ablassventil geöffnet wurde, heiße, unter Druck stehende Flüssigkeit vom Zylinder (50) und in den Korb (90) fließt.

24. Espresso-Kaffeemaschine, umfassend eine thermisch betätigte Pumpe (10) nach einem der vorangehenden Ansprüche.

## Revendications

1. Pompe à commande thermique (10) à des fins d'utilisation dans une machine à boisson chaude comportant : un actionneur thermique (20) et un piston (40), dans laquelle le piston (40) est disposé à l'intérieur d'un cylindre (50) et par ailleurs dans laquelle le piston (40) est accouplé à l'actionneur thermique (20) ; de sorte que, lors de l'utilisation la chaleur fournie à l'actionneur thermique (20) amène l'actionneur thermique (20) à entraîner le piston (40) plus encore dans le cylindre (50) et crée une plus grande pression dans le cylindre (50).

2. Pompe (10) selon la revendication 1, dans laquelle la chaleur est fournie à l'actionneur thermique (20) en vertu du liquide chaud en contact avec l'actionneur thermique (20).

3. Pompe (10) selon la revendication 2, dans laquelle l'actionneur thermique (20) ne se dilate pas sauf si le liquide chaud est à une température suffisante pour faire un café expresso.

4. Pompe (10) selon l'une quelconque des revendications précédentes, dans laquelle la pompe comporte par ailleurs une source de chaleur interne.

5. Pompe (10) selon l'une quelconque des revendications précédentes, dans laquelle le cylindre (50) comporte une partie supérieure (52) et une partie inférieure (54), et par ailleurs dans laquelle le piston (40) comporte un arbre de piston (42) et une tête de piston (44), de sorte que la partie supérieure (52) du cylindre est séparée de la partie inférieure (54) du cylindre par la tête de piston (44).

6. Pompe (10) selon la revendication 5, dans laquelle la partie inférieure (54) du cylindre (50) comporte un élément chauffant (300).

7. Pompe (10) selon l'une quelconque des revendications 5 ou 6, dans laquelle un tuyau de transfert (150) raccorde la partie supérieure (52) du cylindre à la partie inférieure (54).

8. Pompe (10) selon la revendication 7, dans laquelle le tuyau de transfert (150) contient un clapet de non-retour (180) de sorte que, lors de l'utilisation, le liquide s'écoule uniquement vers la partie inférieure (54) du cylindre (50).

9. Pompe (10) selon l'une quelconque des revendications 5 à 8, dans laquelle la tête de piston (44) ou la partie inférieure (54) du cylindre (50) contient un purgeur d'air (160) de sorte que, lors de l'utilisation, quand le liquide chaud s'écoule tout d'abord dans la partie inférieure (54) du cylindre (50), l'air déplacé peut s'échapper.

10. Pompe (10) selon la revendication 9, dans laquelle le purgeur d'air (160) est configuré de sorte que, une fois que la partie inférieure (54) du cylindre (50) contient suffisamment de liquide, l'air ne peut plus s'échapper et il peut en résulter une augmentation de la pression dans la partie inférieure (54) du cylindre (50).

11. Pompe (10) selon l'une quelconque des revendications 1 à 4, comportant par ailleurs une cavité (30), dans laquelle l'actionneur thermique (20) est positionné à l'intérieur de la cavité (30).

12. Pompe (10) selon la revendication 11, comportant par ailleurs un tuyau de transfert (60).

13. Pompe (10) selon la revendication 12, dans laquelle le tuyau de transfert (60) est positionné pour raccorder la cavité (30) au cylindre (50) de sorte que, lors de l'utilisation, le tuyau de transfert (60) transporte le liquide chaud entre la cavité (30) et le cylindre (50).

14. Pompe (10) selon la revendication 12, dans laquelle le tuyau de transfert raccorde un réservoir (140), qui est adjacent mais non raccordé à la cavité (30), au cylindre (50) arrangé de sorte que, lors de l'utilisation, le liquide chaud est placé dans le réservoir (140) et s'écoule dans le cylindre (50) avant que le liquide chaud ne vienne se placer dans la cavité (30).

15. Pompe (10) selon la revendication 12, dans laquelle le tuyau de transfert (150) est configuré de sorte que l'eau en provenance à la fois d'un réservoir (140) et de la cavité (30) s'écoule, par le biais du même tuyau, dans le cylindre (50).

16. Pompe (10) selon l'une quelconque des revendications 12 à 15, dans laquelle le tuyau de transfert (150) contient un clapet de non-retour (180) de sorte que, lors de l'utilisation, le liquide chaud s'écoule uniquement vers le cylindre (50).

17. Pompe (10) selon l'une quelconque des revendications 12 à 16, dans laquelle le cylindre (50) incorpore un purgeur d'air (160) de sorte que, lors de l'utilisation, quand le liquide chaud s'écoule tout d'abord dans le cylindre (50), l'air déplacé peut s'échapper.

18. Pompe (10) selon la revendication 17, dans laquelle le purgeur d'air (160) est configuré de sorte que, une fois que le cylindre (50) contient suffisamment d'eau, l'air ne peut plus s'échapper et il peut en résulter une augmentation de la pression à l'intérieur du cylindre (50).

19. Pompe (10) selon l'une quelconque des revendications 10, 17 ou 18, dans laquelle le purgeur est un clapet de retenue du type flotteur (180, 190).

20. Pompe (10) selon l'une quelconque des revendications précédentes, et comportant par ailleurs un moyen (120) permettant de commander la montée de pression dans le cylindre (50) par rapport à l'extension de l'actionneur (20) de sorte que, lors de l'utilisation, le piston (40) n'est pas entraîné plus encore dans le cylindre (50) tant qu'une pression critique n'est pas atteinte dans le cylindre (50).

21. Pompe (10) selon la revendication 20, dans laquelle le moyen permettant de commander la montée de pression comporte un ressort (120) installé entre l'actionneur thermique (20) et le piston (40), en combinaison avec un détendeur de pression (130) installé à l'intérieur de la trajectoire de l'écoulement de fluide en provenance du cylindre (50).

22. Pompe (10) selon l'une quelconque des revendications précédentes, comportant par ailleurs un mécanisme de retour, de sorte que le piston (40) et l'actionneur (20) retournent sur la position de départ après chaque utilisation.

23. Pompe (10) selon l'une quelconque des revendications précédentes, comportant par ailleurs un panier (90) raccordé au cylindre (50) de sorte que, lors de l'utilisation, une fois que tout détendeur de pression a été ouvert, le liquide chaud sous pression passe du cylindre (50) au panier (90).

24. Machine à café expresso comportant une pompe à commande thermique (10) selon l'une quelconque des revendications précédentes.
